# FASCICULE DE BREVET EUROPEEN

(11) **EP 2 878 533 B1**
(45) Date de publication et mention de la délivrance du brevet: **10.04.2019**
(21) Numéro de dépôt: 14184006.6
(22) Date de dépôt: 09.09.2014
(51) Int. Cl.: B64C 13/18, B64C 13/50, G05D 1/00, G05D 1/06, G05D 1/08

(54) **Procédé et système de commande de vol d'un aéronef**
Flugsteuerungsverfahren und -vorrichtung für ein Flugzeug
Flight control method and device for an aircraft

(30) Priorité: 13.09.2013 FR 1358827
(43) Date de publication de la demande: 03.06.2015
(73) Titulaire: AIRBUS OPERATIONS (S.A.S), 31060 Toulouse (FR)
(72) Inventeur: Moune, Marie-Claire, 31170 Tournefeuille (FR); Barba, Matthieu, 31100 Toulouse (FR); Poujol, Christophe, 31790 Saint-Jory (FR); Ronceray, Lilian, 31880 La Salvetat Saint Gilles (FR)
(74) Mandataire: Sarraméa, Claude

(56) Documents cités:
- EP-A1- 1 160 157
- FR-A1- 2 874 204
- FR-A1- 2 909 462
- US-A- 5 197 697

## Description

La présente invention concerne un système de commande de vol électrique d'un aéronef, en particulier d'un avion de transport, et un procédé pour commander le vol d'un aéronef à l'aide d'un tel système.

De façon usuelle, un système de commande de vol d'un aéronef comprend :
- au moins une gouverne mobile, apte à être braquée en fonction d'ordres de braquage reçus ;
- au moins un manche de commande apte à être actionné par un pilote de l'aéronef, la position du manche de commande générant des premiers ordres de guidage représentatifs de ladite position ;
- un dispositif de pilotage automatique apte à générer des seconds ordres de guidage ; et
- au moins un calculateur de commande de vol qui élabore des ordres de braquage de gouverne, à l'aide d'un moyen de calcul intégré qui contient des lois de pilotage et qui utilise pour cette élaboration des ordres de guidage, lesdits ordres de guidage correspondant auxdits premiers ordres de guidage lors d'un pilotage manuel et auxdits seconds ordres de guidage lors d'un pilotage automatique.

Par ailleurs, le dispositif de pilotage automatique dispose généralement, dans certains modes de fonctionnement, d'une protection du domaine de vol de l'aéronef (haute et basse vitesses, haute incidence, attitudes excessives) protégeant le vol contre des valeurs excessives de vitesses et d'attitudes. De plus, ce dispositif de pilotage automatique est généralement limité en autorité (par exemple +/- 0,3g en longitudinal et +/- 30° en latéral).

Avec de telles limites, les objectifs de performance et de confort alloués au dispositif de pilotage automatique sont atteignables. De plus, en raison de ces limites, l'effet d'une panne du dispositif de pilotage automatique reste réduit, ce qui permet de simplifier l'architecture et d'abaisser la criticité des pannes dudit dispositif de pilotage automatique et donc d'en simplifier la conception et la validation. La plupart des dispositifs de pilotage automatique présentent une autorité limitée au juste besoin, et toute la conception et l'analyse de panne reposent sur cette hypothèse.

Les documents FR 2 874 204 A, FR 2 909 462 A, US 5 197 697 A et EP1 160 157 A1 illustrent des exemples de systèmes de commandes de vol électriques selon l'art antérieur.

Par ailleurs, le système de commande de vol électrique permet à tout moment à l'équipage d'obtenir le maximum de manoeuvrabilité disponible, tout en restant dans un domaine de vol protégé (en vitesse, incidence et attitude). Si l'équipage, en mode de pilotage manuel, défléchit le manche de commande en pleine butée, le système permet de tirer le maximum des capacités courantes de l'aéronef.

Pour faire face à des événements exceptionnels tels que des rafales de vent ou de forts gradients de vent (changement de direction de vent), une unité dédiée désengage le dispositif de pilotage automatique lorsque ce dernier n'arrive pas à maintenir l'aéronef dans le domaine de vol normal, du fait de son autorité limitée. Une alarme est alors émise et l'équipage doit éventuellement réaliser une compensation en utilisant la pleine autorité disponible avec les commandes de vol manuel.

Bien que ne présentant pas de problème de sécurité, un tel fonctionnement induit une surcharge de travail de l'équipage et un risque de déviation de la trajectoire initiale, alors que les phénomènes de perturbations extérieures sont souvent ponctuels, et que le vol pourrait, après l'évènement, continuer à être réalisé avec le dispositif de pilotage automatique s'il était resté engagé.

De plus, le dispositif de pilotage automatique ne peut pas être engagé lorsque l'aéronef est en dehors du domaine normal d'utilisation dudit dispositif. Dans une telle situation (lorsque l'aéronef est en dehors du domaine de vol dans lequel le dispositif de pilotage automatique fonctionne normalement), le pilote doit donc piloter l'aéronef manuellement pour le remettre dans le domaine de vol normal. Le dispositif de pilotage automatique pourra être réengagé uniquement lorsque l'aéronef se retrouvera dans le domaine de vol normal.

Ce système de commande de vol électrique usuel génère donc une surcharge de travail du pilote dans des conditions de vol particulières, pour lesquelles le dispositif de pilotage automatique n'arrive pas à maintenir l'aéronef dans le domaine de vol normal, du fait de son autorité limitée.

La présente invention a pour objet de remédier à cet inconvénient. Elle concerne un système de commande de vol électrique d'un aéronef, du type comportant :
- au moins une gouverne mobile, apte à être braquée en fonction d'ordres de braquage reçus ;
- au moins un manche de commande, apte à être actionné manuellement par un pilote de l'aéronef, la position du manche de commande générant des premiers ordres de guidage représentatifs de ladite position ;
- un dispositif de pilotage automatique, apte à générer automatiquement des seconds ordres de guidage ; et
- au moins un calculateur de commande de vol configuré pour calculer automatiquement des ordres de braquage de gouverne, à l'aide d'une unité de calcul intégrée qui contient des lois de pilotage, cette unité de calcul intégrée utilisant des ordres de guidage pour calculer ces ordres de braquage de gouverne, lesdits ordres de guidage correspondant auxdits premiers ordres de guidage lors d'un pilotage manuel de l'aéronef et auxdits seconds ordres de guidage lors d'un pilotage automatique de l'aéronef, ledit calculateur de commande de vol comprenant au moins un module de protection du domaine de vol de l'aéronef définissant une protection en fonction d'une position de manche de commande reçue lors d'un pilotage manuel, ledit module de protection étant apte à limiter l'ordre de braquage transmis à la gouverne.

Selon l'invention, ledit système de commande de vol est remarquable en ce qu'il comporte de plus :
- un premier élément de détection configuré pour détecter automatiquement un pilotage automatique de l'aéronef à l'aide dudit dispositif de pilotage automatique ; et
- un élément auxiliaire configuré pour transmettre automatiquement audit module de protection du domaine de vol, lors de la détection d'un pilotage automatique, une position auxiliaire prédéterminée, représentant un équivalent de position de manche de commande, ledit module de protection du domaine de vol utilisant cette position auxiliaire comme position de manche de commande pour mettre en oeuvre la protection lors de ce pilotage automatique.

Ainsi, grâce à l'invention, lors d'un pilotage automatique de l'aéronef (via le dispositif de pilotage automatique), on utilise une ou plusieurs protections usuelles (prévues pour protéger le domaine de vol de l'aéronef lors d'un pilotage manuel), en introduisant dans le ou les modules de protection correspondants une position auxiliaire prédéterminée, représentant un équivalent de position de manche de commande, ce qui permet d'utiliser cette ou ces protections lors de ce pilotage automatique. Par conséquent, lorsque le dispositif de pilotage automatique est engagé, ces protections protègent l'aéronef, de sorte que le dispositif de pilotage automatique n'a plus à être désengagé lorsque l'aéronef s'approche des limites du domaine de vol. Il devient donc possible de maintenir le dispositif de pilotage automatique engagé dans un domaine de vol équivalent à celui du pilotage manuel. Ainsi, quelles que soient les perturbations extérieures auxquelles sera soumis l'aéronef, le dispositif de pilotage automatique peut rester engagé. De plus, à tout moment, même en cas de perturbations sévères ou de sortie involontaire du domaine de vol normal, le dispositif de pilotage automatique peut être réengagé, ce qui aura pour effet de ramener l'aéronef dans le domaine de vol normal. Ces caractéristiques permettent de réduire la surcharge de travail du pilote existant avec un système de commande de vol usuel et ainsi de remédier à l'inconvénient précité.

Ledit système de commande de vol peut comporter l'un ou plusieurs des éléments ou caractéristiques suivants, pris individuellement ou en combinaison :
- ledit calculateur de commande de vol comprend une pluralité de modules de protection différents du domaine de vol, et l'élément auxiliaire est configuré pour transmettre, lors d'un pilotage automatique, une position auxiliaire à au moins certains desdits modules de protection ;
- le système de commande de vol comporte un second élément de détection configuré pour détecter automatiquement, lors d'un pilotage automatique, un mode courant du dispositif de pilotage automatique, et ledit élément auxiliaire est configuré pour transmettre une position auxiliaire prédéterminée associée à ce mode courant ;
- le calculateur de commande de vol comporte au moins un module de protection du domaine de vol réalisant au moins l'une des protections suivantes :
   - une protection de haute vitesse ;
   - une protection de basse vitesse ;
   - une protection d'assiette maximale ;
   - une protection d'assiette minimale ;
   - une protection d'incidence ; et
   - une protection de roulis ;
- le calculateur de commande de vol comporte une unité d'alerte (de type visuel et/ou sonore) configurée pour prévenir un pilote, le cas échéant, de la mise en oeuvre d'une protection par le module de protection lors d'un pilotage automatique ;
- le calculateur de commande de vol comporte des moyens pour détecter une situation de risque de mise en oeuvre d'une protection par le module de protection, et il est configuré pour agir sur au moins l'un des ensembles suivants : un dispositif de poussée automatique et des aérofreins de l'aéronef, de manière à au moins retarder la mise en oeuvre de la protection par le module de protection.

La présente invention concerne également un procédé pour commander le vol d'un aéronef, à l'aide d'un système de commande de vol électrique tel que celui précité.

Selon l'invention, ledit procédé comprend des étapes consistant :
- à surveiller le type de pilotage (pilotage manuel, pilotage automatique) mis en oeuvre par le système de commande de vol de manière à pouvoir détecter automatiquement un pilotage automatique de l'aéronef à l'aide dudit dispositif de pilotage automatique ; et
- à transmettre automatiquement audit module de protection du domaine de vol, lors de la détection d'un pilotage automatique, une position auxiliaire prédéterminée, représentant un équivalent de position de manche de commande, ledit module de protection du domaine de vol utilisant cette position auxiliaire comme position de manche de commande pour mettre en oeuvre la protection lors de ce pilotage automatique.

Avantageusement, ladite position auxiliaire peut correspondre au moins à l'une des positions suivantes du manche de commande :
- une position au neutre du manche de commande ;
- une position relative à une déflexion complète du manche de commande ;
- au moins une position relative à une déflexion du manche de commande, comprise entre la position au neutre et la déflexion complète du manche de commande.

Par ailleurs, ledit procédé peut comporter l'une ou plusieurs des étapes suivantes, prises individuellement ou en combinaison :
- une étape consistant à augmenter le domaine d'activation d'au moins l'un des éléments suivants du système de commande de vol :
   - un dispositif automatique de poussée ;
   - des aérofreins ;
   - une alarme de basse énergie ;
   - une unité pour supprimer des informations non essentielles d'un affichage de paramètres primaires de vol dans des situations prédéterminées ;
- une étape consistant à limiter un ordre de roulis en fonction de la vitesse lors d'un pilotage automatique ;
- une étape consistant, après la mise en oeuvre d'une protection par un module de protection du domaine de vol, à ramener automatiquement le dispositif de pilotage automatique, dans le mode de guidage initial qui était actif avant la mise en oeuvre de ladite protection, pour tout mode de guidage autre qu'un mode de maintien d'altitude.

Par ailleurs, la présente invention concerne également un aéronef, en particulier un avion de transport, qui comporte un système de commande de vol électrique tel que celui précité.

La figure du dessin annexé fera bien comprendre comment l'invention peut être réalisée. Cette figure unique est le schéma synoptique d'un système qui illustre un mode de réalisation de l'invention.

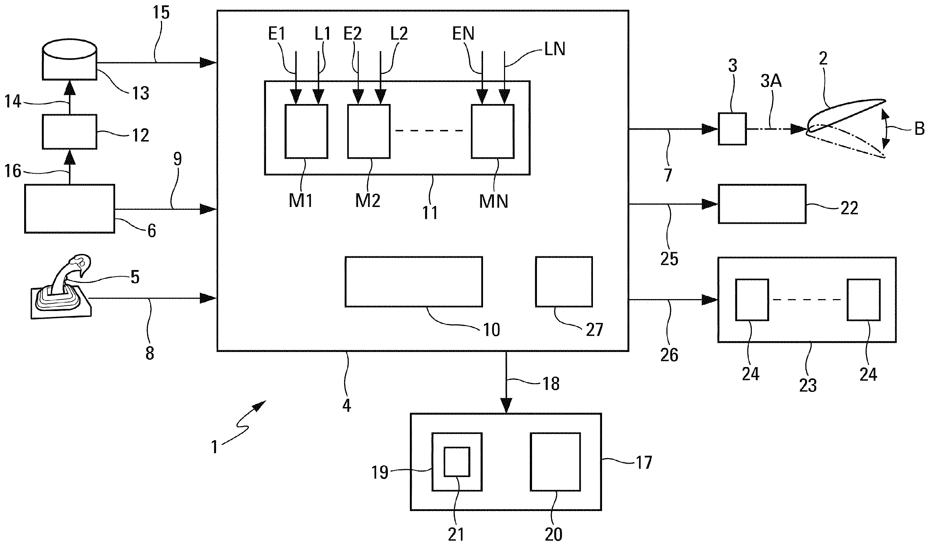

Le système 1 représenté schématiquement sur la figure 1 et permettant d'illustrer l'invention, est un système de commande de vol électrique d'un aéronef, en particulier d'un avion de transport.

Ledit système de commande de vol électrique 1, qui est embarqué sur l'aéronef, est du type comportant :
- au moins une gouverne mobile 2 usuelle (par exemple une gouverne de profondeur) de l'aéronef, cette gouverne 2 étant apte à être braquée (d'un angle B) sous l'action d'un actionneur usuel 3 (comme illustré par une flèche 3A en traits mixtes), en fonction d'ordres de braquage reçus ;
- au moins un manche de commande 5 qui est apte à être actionné manuellement par un pilote de l'aéronef. La position du manche de commande 5 génère, de façon usuelle, des premiers ordres de guidage représentatifs de position dans laquelle est amené ledit manche de commande 5 ;
- un dispositif de pilotage automatique 6 qui est apte à générer automatiquement des seconds ordres de guidage ; et
- au moins un calculateur de commande de vol 4 qui est relié par l'intermédiaire de liaisons 7, 8 et 9 respectivement audit actionneur 3, audit manche de commande 5 et audit dispositif de pilotage automatique 6 et qui est configuré pour calculer automatiquement de façon usuelle, à l'aide d'une unité de calcul intégrée 10, des ordres de braquage de gouverne, qui sont transmis à l'actionneur 3 via la liaison 7.

Cette unité 10 contient des lois de pilotage et utilise, pour le calcul, des ordres de guidage qui correspondent :
- auxdits premiers ordres de guidage (reçus via la liaison 8) lors d'un pilotage manuel de l'aéronef ; et
- auxdits seconds ordres de guidage (reçus via la liaison 9) lors d'un pilotage automatique de l'aéronef.

Le calculateur de commande de vol 4 comprend également un ensemble 11 de modules de protection M1 à MN du domaine de vol de l'aéronef, N étant un entier. Ces modules de protection M1 à MN réalisent, de façon usuelle, une protection en fonction d'une position de manche de commande 5 reçue lors d'un pilotage manuel via des liaisons E1 à EN (qui sont par exemple reliées à la liaison 8). Ces modules de protection M1 à MN sont aptes à limiter, de façon usuelle, l'ordre de braquage transmis à l'actionneur 3 de la gouverne 2 par le calculateur 4.

Selon l'invention, ledit système de commande de vol 1 comporte de plus :
- un élément de détection 12 qui est configuré pour détecter automatiquement un pilotage automatique de l'aéronef (mis en oeuvre à l'aide du dispositif de pilotage automatique 6). Plus précisément, il est apte à détecter un engagement dudit dispositif de pilotage automatique 6 auquel il est par exemple relié par l'intermédiaire d'une liaison 16 ; et
- un élément auxiliaire 13 qui est relié par l'intermédiaire de liaisons 14 et 15, respectivement, audit élément de détection 12 et audit calculateur 4. Cet élément auxiliaire 13, par exemple une base de données, est configuré pour transmettre automatiquement à au moins certains desdits modules de protection M1 à MN (via des liaisons L1 à LN reliées par exemple à la liaison 15), lors de la détection d'un pilotage automatique par l'élément de détection 12, des positions auxiliaires prédéterminées, représentant un équivalent de position de manche de commande. Le ou les modules de protection M1 à MN concernés utilisent, chacun, la position auxiliaire reçue, comme position de manche de commande, pour mettre en oeuvre la protection correspondante, lors du pilotage automatique.

Ainsi, grâce à ces caractéristiques, le système de commande de vol 1 est en mesure de protéger le domaine de vol de l'aéronef (haute et basse vitesses, haute incidence, attitudes excessives) lorsque le dispositif de pilotage automatique 6 est engagé, tout en utilisant la pleine autorité de l'aéronef. Ainsi, il n'existe plus de raison de dégager le dispositif de pilotage automatique 6 lors d'une perturbation externe importante, telle que des gradients de vent, car disposant de la pleine autorité, le pilote ne pourra pas faire mieux que le dispositif de pilotage automatique 6. De plus, cela permet de pouvoir engager le dispositif de pilotage automatique 6 dans tout le domaine de vol contrôlé par les commandes de vol et ainsi d'avoir un moyen très intuitif de ramener l'aéronef dans le domaine de vol normal.

L'élément de détection 12 et/ou l'élément auxiliaire 13 peuvent être intégrés dans le calculateur de commande de vol 4.

Ledit ensemble 11 du calculateur de commande de vol 4 comprend une pluralité de modules de protection M1 à MN différents, et l'élément auxiliaire 13 est configuré pour transmettre, lors d'un pilotage automatique, une position auxiliaire à au moins certains desdits modules de protection M1 à MN.

Plus précisément, le calculateur de commande de vol 4 comporte des modules de protection M1 à MN réalisant au moins certaines des protections suivantes :
- une protection de haute vitesse ;
- une protection de basse vitesse ;
- une protection d'assiette maximale ;
- une protection d'assiette minimale ;
- une protection d'incidence ; et
- une protection de roulis.

Par ailleurs, ladite position auxiliaire transmise par l'élément auxiliaire 13 peut correspondre au moins à l'une des positions équivalentes suivantes du manche de commande :
- une position au neutre ;
- une position relative à une déflexion complète du manche de commande ; et
- au moins une position relative à une déflexion comprise entre la position au neutre et la déflexion complète du manche de commande.

Le système de commande de vol 1 comporte également un élément de détection, de préférence ledit élément de détection 12, qui est configuré pour détecter automatiquement, lors d'un pilotage automatique, le mode de guidage courant du dispositif de pilotage automatique 6. Dans ce cas, l'élément auxiliaire 13 est configuré pour transmettre une position auxiliaire prédéterminée associée au mode de guidage courant ainsi détecté.

Dans un mode de réalisation préféré, ladite position auxiliaire peut varier en fonction de la protection considérée, c'est-à-dire qu'à un instant donné des valeurs de position auxiliaire différentes (ou non) sont fournies via les liaisons L1 à LN. La position auxiliaire peut correspondre aux positions indiquées ci-dessous pour différents modes de guidage, à savoir :
A/ pour une protection de haute vitesse (Vmax) :
   - dans tous les modes de guidage du dispositif de pilotage automatique 6, sauf un mode ALT de maintien d'altitude, l'équivalent manche est un équivalent « manche au neutre » ; et
   - dans le mode ALT du dispositif de pilotage automatique 6 (maintien d'une altitude), l'équivalent manche utilisé pour la protection haute vitesse est un équivalent « manche à demi défléchi », ce qui permet de privilégier le maintien de l'altitude, tout en conservant un minimum d'autorité pour le pilote ;
B/ pour une protection d'assiette minimale (θmin) :
   la protection d'assiette minimale des commandes de vol ne dépendant pas de la position du manche 5, en pilotage automatique cette protection est appliquée sans aucune modification ;
C/ pour une protection d'incidence (basse vitesse) en loi normale :
   dans tous les modes du dispositif de pilotage automatique 6, l'équivalent manche utilisé pour la protection d'incidence est un équivalent « plein manche défléchi » ;
D/ pour une protection de basse vitesse en loi alternative (« alternate ») :
   - dans les configurations d'atterrissage (becs/volets en configuration 3 et « Full »), l'équivalent manche utilisé pour la protection de basse vitesse est un équivalent « quart de manche défléchi » ; et
   - dans les configurations autres que celles d'atterrissage, l'équivalent manche utilisé pour la protection de basse vitesse est un équivalent « manche au neutre » ;
E/ pour une protection d'assiette maximale (θmax) :
   on utilise le même équivalent manche défléchi que celui de la protection d'incidence, à savoir :
   - en loi normale, un équivalent « plein manche défléchi » ;
   - en loi alternative et configuration d'atterrissage, un équivalent « quart de manche défléchi » ; et
   - en loi alternative pour les autres configurations, un équivalent « manche neutre » ; et
F/ pour une protection de roulis, l'équivalent manche utilisé pour la protection de roulis est un équivalent «plein manche défléchi».

En fonction des modes de guidage du dispositif de pilotage automatique 6, il peut être souhaitable, soit de fournir la pleine autorité au dispositif de pilotage automatique 6, (dans ce cas, un équivalent « plein manche défléchi » est utilisé), soit que le pilote conserve une autorité supplémentaire par rapport à l'action du dispositif de pilotage automatique 6 (dans ce cas, un équivalent autre qu'un équivalent « plein manche défléchi » est utilisé, par exemple un équivalent « manche au neutre », « quart de manche défléchi » ou « manche à demi défléchi »). En effet, utiliser la pleine autorité de l'aéronef diminue significativement les marges par rapport aux limites structurelles et/ou au décrochage. Aussi, dans certaines situations, il peut être souhaitable que le dispositif de pilotage automatique 6 ne réduise pas toutes les marges sans action volontaire de l'équipage. La présente invention permet ainsi une adaptation au cas par cas, en utilisant un équivalent de manche approprié.

Le système de commande de vol 1 comporte également une unité d'alerte 17 qui est reliée par l'intermédiaire d'une liaison 18 au calculateur de commande de vol 4 et qui est configurée pour prévenir un pilote, le cas échéant, de la mise en oeuvre d'une protection par un module de protection M1 à MN lors d'un pilotage automatique. Cette unité d'alerte 17 peut comporter notamment :
- une unité d'affichage 19 qui réalise un affichage sur un écran de visualisation 21 permettant de mettre en oeuvre une alerte visuelle ; et
- un moyen usuel 20 pour générer une alerte sonore dans le poste de pilotage.

Dans un mode de réalisation préféré, les éléments 6, 9, et 12 à 16 font partie du calculateur de commande vol 4.

Par ailleurs, le calculateur de commande de vol 4 comporte également des moyens 27 pour détecter une situation de risque de mise en oeuvre d'une protection par au moins l'un desdits modules de protection M1 à MN de l'ensemble 11. De plus, ledit calculateur de commande de vol 4 est configuré pour agir sur un dispositif automatique de poussée 22 et/ou sur un ensemble 23 d'aérofreins 24 de l'aéronef (qui sont reliés via des liaisons 25 et 26 audit calculateur 4) de manière à retarder la mise en oeuvre de la protection par le ou les modules de protection M1 à MN.

Par ailleurs, le calculateur de commande de vol 4 peut comporter des moyens intégrés pour augmenter le domaine d'activation d'au moins l'un des éléments suivants dudit système de commande de vol 1 :
- le dispositif automatique de poussée 22 ;
- les aérofreins 24 ;
- une alarme de basse énergie, faisant par exemple partie du moyen d'alarme 20 ; et
- une unité pour supprimer des informations non essentielles d'un affichage de paramètres primaires de vol dans des situations prédéterminées, faisant par exemple partie de l'unité d'affichage 19.

Plus particulièrement, le dispositif automatique de poussée 22 peut mettre en oeuvre une fonction de protection usuelle contre des situations de basse énergie (vitesse faible, haute incidence, faible poussée moteur), de type « alpha floor », consistant à augmenter automatiquement la poussée des moteurs de l'aéronef pour qu'ils fournissent une poussée maximale. Afin de couvrir l'ensemble du domaine de vol de l'aéronef, le domaine d'activation de ce dispositif automatique de poussée 22 mettant en oeuvre une fonction « alpha floor » est étendu lorsque le dispositif de pilotage automatique 6 est engagé. Dans un mode de réalisation préféré, le nouveau domaine pour l'activation est :
- Mach < 0,5 ; ou
- la vitesse de l'aéronef est inférieure à VLS -20 noeuds et le dispositif de pilotage automatique 6 est engagé.

Par ailleurs :
- lorsque la vitesse de l'aéronef devient excessive (Vmax + 5kt), le dispositif automatique de poussée 22 est automatiquement engagé, ce qui permet de réduire la poussée dans le cas où le pilotage de la poussée était manuel ;
- lorsque la fonction « alpha floor » est déclenchée, les aérofreins 24 sont (automatiquement) complètement rétractés ; et
- lorsque la vitesse de l'aéronef dépasse la vitesse maximale de 5 noeuds ou bien lorsque la vitesse de l'aéronef (plus la dérivée à 10 secondes de ladite vitesse) dépasse la vitesse maximale de 10 noeuds, les aérofreins 24 sont automatiquement déployés. Ces derniers sont rétractés dès que la vitesse de l'aéronef diminue sous la somme de la vitesse maximale et de 2 noeuds.

Par ailleurs, en raison de l'extension du domaine de vol du dispositif de pilotage automatique 6, ce dernier est amené à fonctionner à des forts angles de roulis. Aussi, on rend prioritaire, à grand angle de roulis, l'ordre latéral par rapport à l'ordre de profondeur. En pilotage automatique, l'ordre de profondeur est donc limité en fonction du roulis de l'aéronef, l'angle de roulis maximal autorisé par le dispositif de pilotage automatique 6 est 30°.

De manière réciproque, lorsque la vitesse de l'aéronef devient faible, il est préférable de maintenir le roulis à de faibles valeurs. Aussi, lorsque le dispositif de pilotage automatique 6 est engagé, l'ordre de roulis est limité en fonction de la vitesse.

Par ailleurs, le dispositif de pilotage automatique 6 est configuré pour être ramené automatiquement, après la mise en oeuvre d'une protection par au moins un module de protection M1 à MN de l'ensemble 11, dans le mode de guidage initial qui était actif avant la mise en oeuvre de ladite protection, et ceci pour tout mode de guidage autre qu'un mode de maintien d'altitude.

Ainsi, le dispositif de pilotage automatique 6 conserve le mode initial de guidage lorsque les protections des commandes de vol amènent l'aéronef transitoirement à abandonner son objectif initial. Aussi, lorsque la perturbation disparaît, le dispositif de pilotage automatique 6 retrouve son mode de guidage initial, à l'exception du mode ALT (maintien d'altitude).

Dans ce mode de maintien d'altitude, si une perturbation suffisamment importante amène l'aéronef à quitter l'altitude initiale, le retour à cette altitude n'est pas forcément la meilleure stratégie. Aussi, deux cas sont envisagés :
- soit l'aéronef s'est peu écarté de l'altitude initiale (par exemple de moins de 250 pieds : au-dessous du seuil de déclenchement de l'altitude d'alerte). Dans ce cas, le dispositif de pilotage automatique 6 cherche à ramener l'aéronef sur l'altitude initiale ;
- soit l'aéronef s'est significativement écarté de l'altitude initiale (par exemple de plus de 250 pieds : au-dessus du seuil de déclenchement de l'altitude d'alerte). Dans ce cas, le dispositif de pilotage automatique 6 cherche à maintenir un palier en utilisant le mode de maintien de vitesse verticale nulle (V/S =0). Ainsi, l'aéronef vole suivant un palier à une altitude différente de l'altitude initialement asservie, mais l'alerte mise en oeuvre permet à l'équipage de comprendre la situation, tout en minimisant l'écart à l'altitude initiale.

Le système 1 comporte donc une unité d'alerte 17, et en particulier une unité d'affichage 19 comprenant notamment un écran 21 de type FMA (« Flight Mode Annunciator » en anglais), qui permet de faire comprendre la situation à l'équipage.

Dans un mode de réalisation préféré, lorsque les protections des commandes de vols génèrent une action qui surpasse l'ordre du dispositif de pilotage automatique 6 :
- un message « AP IN PROT » (dispositif de pilotage automatique 6 en protection) est affiché sur l'unité d'affichage 19 (écran 21 de type FMA par exemple) ;
- le mode longitudinal, dont l'objectif n'est plus tenu par le dispositif de pilotage automatique 6, est signalé en une couleur appropriée, par exemple en ambre ; et
- une alerte audio est générée via l'unité 20.

Dans ce mode de réalisation préféré, on réutilise des moyens qui sont déjà utilisés pour le dispositif de pilotage automatique 6 pour signaler des modes inusuels et des changements de mode non commandés par l'équipage, ce qui permet de faciliter la compréhension de la situation par le pilote. Ce principe est également appliqué pour l'engagement du dispositif 22.

Par ailleurs, afin de correctement restituer à l'équipage un changement d'état de la position des aérofreins 24 :
- un message « SPD BRK AUTO EXT » (sortie des aérofreins 24) est affiché sur l'écran de visualisation 21 ; et
- des repères de déflexion des aérofreins 24 sont affichés en une couleur appropriée, par exemple en ambre.

Par ailleurs, une alarme audio, appelée basse énergie (« low energy » en anglais), qui est générée à basse altitude (par exemple via l'unité 20) lorsque l'énergie de l'aéronef diminue, présente un seuil de déclenchement qui est calé de façon à ce qu'elle soit émise avant le déclenchement de la fonction « alpha floor ». Cela permet à l'équipage de mettre en oeuvre des actions appropriées (augmenter la poussée et/ou rentrer les aérofreins 24). Comme le domaine d'activation de la fonction « alpha floor » est étendu à l'ensemble du domaine de vol, les conditions d'activation de cette alarme sont également étendues en pilotage automatique, de façon à maintenir l'objectif de déclenchement de cette alarme avant le déclenchement de la fonction « alpha floor ».

Dans un mode de réalisation préféré, cette alarme est générée en pilotage automatique uniquement, quelles que soient l'altitude et la configuration de l'aéronef, si la vitesse est inférieure au maximum de :
- la vitesse correspondant à la protection « alpha floor » ;
- VLS - 10 pieds.

Comme indiqué ci-dessus, le système 1 comporte également une unité pour supprimer des informations non essentielles d'un affichage de paramètres primaires de vol (notamment un écran de type FMA) dans des situations prédéterminées, faisant par exemple partie de l'unité d'affichage 19.

Cette unité est inhibée tant que le dispositif de pilotage automatique 6 est engagé.

Ainsi, grâce à l'invention, le système 1 utilise donc des protections usuelles des commandes de vol (en pilotage manuel) en introduisant dans ces dernières un équivalent de déflexion du manche de commande 5 (qui peut dépendre des modes de guidage du dispositif de pilotage automatique 6 et/ou de la configuration de l'aéronef). Lorsque le dispositif de pilotage automatique 6 est engagé, le résultat des protections limite l'ordre délivré et permet ainsi de protéger l'aéronef avec l'autorité des commandes de vol. Ainsi protégé, il n'est plus nécessaire de dégager le dispositif de pilotage automatique 6 lorsque l'aéronef s'approche des limites du domaine de vol, car les protections des commandes de vol feront, si cela est souhaité, aussi bien que ne le ferait un pilote (en agissant manuellement sur le manche de commande 5). Il devient donc possible de maintenir le dispositif de pilotage automatique 6 engagé dans un domaine de vol équivalent à celui des commandes de vol. De plus, il est également possible d'autoriser l'engagement du dispositif de pilotage automatique 6 dans un domaine de vol très élargi, et ainsi d'avoir un dispositif de pilotage automatique 6 ramenant l'aéronef dans le domaine de vol normal.

Par conséquent, quelles que soient les perturbations extérieures auxquelles sera soumis l'aéronef, le dispositif de pilotage automatique 6 peut rester engagé, et à tout moment, même en cas de perturbations sévères ou de sortie involontaire du domaine de vol normal, le dispositif de pilotage automatique 6 peut être réengagé, ce qui aura pour effet de ramener l'aéronef dans le domaine de vol normal. Cela permet de réduire la charge de travail du pilote qui n'aura donc plus à ramener l'aéronef dans son domaine de vol nominal avant de pouvoir engager le dispositif de pilotage automatique 6.

On notera que la présente invention ne prévoit pas de simplement développer dans le dispositif de pilotage automatique 6 une protection du domaine de vol équivalente à celle des commandes de vol, ce qui poserait en pratique de nombreuses difficultés, et en particulier :
- les paramètres utilisés pour pouvoir protéger efficacement le domaine de vol de l'aéronef étant significativement différents des paramètres requis pour le dispositif de pilotage automatique, une duplication des lois de pilotage supposerait également une duplication du traitement des entrées nécessaires pour son bon fonctionnement ;
- une activité supplémentaire de validation très coûteuse serait nécessaire, pour valider ces nouvelles protections lorsqu'elles sont incluses dans le dispositif de pilotage automatique ; et
- le dispositif de pilotage automatique devrait également posséder le niveau d'intégrité requis pour accueillir une fonction de protection ayant potentiellement la pleine autorité sur les gouvernes de l'aéronef, ce qui en compliquerait la réalisation notamment à cause de l'augmentation d'intégrité de nombreuses fonctions.

L'utilisation des protections usuelles du pilotage manuel, par la prise en compte d'un équivalent de manche de commande, permet de remédier à ces inconvénients, c'est-à-dire d'obtenir une protection pour laquelle aucune duplication du traitement des entrées et aucun développement particulier ne sont nécessaires et une validation réduite est suffisante.

## Revendications

1. Système de commande de vol électrique d'un aéronef, comportant :
- au moins une gouverne mobile (2) apte à être braquée en fonction d'ordres de braquage reçus ;
- au moins un manche de commande (5) apte à être actionné manuellement par un pilote de l'aéronef, la position du manche de commande (5) générant des premiers ordres de guidage représentatifs de ladite position ;
- un dispositif de pilotage automatique (6) apte à générer automatiquement des seconds ordres de guidage ; et
- au moins un calculateur de commande de vol (4) configuré pour calculer automatiquement des ordres de braquage de gouverne, à l'aide d'une unité de calcul intégrée (10) qui contient des lois de pilotage, cette unité de calcul intégrée (10) utilisant des ordres de guidage pour calculer ces ordres de braquage de gouverne, lesdits ordres de guidage correspondant auxdits premiers ordres de guidage lors d'un pilotage manuel de l'aéronef et auxdits seconds ordres de guidage lors d'un pilotage automatique de l'aéronef, ledit calculateur de commande de vol (4) comprenant au moins un module de protection (M1 à MN) du domaine de vol de l'aéronef définissant une protection en fonction d'une position de manche de commande (5) reçue lors d'un pilotage manuel, ledit module de protection (M1 à MN) étant apte à limiter l'ordre de braquage transmis à la gouverne (2),
ce système de commande de vol étant **caractérisé en ce qu'**il comporte de plus :
- un premier élément de détection (12) configuré pour détecter automatiquement un pilotage automatique de l'aéronef à l'aide dudit dispositif de pilotage automatique (6) ; et
- un élément auxiliaire (13) configuré pour transmettre automatiquement audit module de protection (M1 à MN) du domaine de vol, lors de la détection d'un pilotage automatique, une position auxiliaire prédéterminée, représentant un équivalent de position de manche de commande, ledit module de protection (M1 à MN) du domaine de vol utilisant cette position auxiliaire comme position de manche de commande pour mettre en oeuvre la protection lors de ce pilotage automatique.

2. Système selon la revendication 1,
**caractérisé en ce que** ledit calculateur de commande de vol (4) comprend une pluralité de modules de protection (M1 à MN) différents du domaine de vol, et **en ce que** l'élément auxiliaire (13) est configuré pour transmettre, lors d'un pilotage automatique, une position auxiliaire à au moins certains desdits modules de protection (M1 à MN).

3. Système selon l'une des revendications 1 et 2,
**caractérisé en ce qu'**il comporte un second élément de détection (12) configuré pour détecter automatiquement, lors d'un pilotage automatique, un mode courant du dispositif de pilotage automatique (6), et **en ce que** ledit élément auxiliaire (13) est configuré pour transmettre une position auxiliaire prédéterminée associée à ce mode courant.

4. Système selon l'une quelconque des revendications 1 à 3, **caractérisé en ce que** le calculateur de commande de vol (4) comporte au moins un module de protection (M1 à MN) du domaine de vol réalisant au moins l'une des protections suivantes :
- une protection de haute vitesse ;
- une protection de basse vitesse ;
- une protection d'assiette maximale ;
- une protection d'assiette minimale ;
- une protection d'incidence ; et
- une protection de roulis.

5. Système selon l'une quelconque des revendications précédentes, **caractérisé en ce qu'**il comporte une unité d'alerte (17) configurée pour prévenir un pilote, le cas échéant, de la mise en oeuvre d'une protection par le module de protection (M1 à MN) lors d'un pilotage automatique.

6. Système selon l'une quelconque des revendications précédentes, comportant de plus un dispositif de poussée automatique (22) et des aérofreins (24),
**caractérisé en ce qu'**il comporte des moyens pour détecter une situation de risque de mise en oeuvre d'une protection par le module de protection (M1 à MN), et **en ce que** le système de commande de vol (1) est configuré pour agir sur au moins l'un des ensembles suivants : le dispositif de poussée automatique (22) et les aérofreins (24) de l'aéronef, de manière à au moins retarder la mise en oeuvre de la protection par le module de protection (M1 à MN).

7. Procédé pour commander le vol d'un aéronef, à l'aide d'un système de commande de vol électrique (1) comportant :
- au moins une gouverne mobile (2) apte à être braquée en fonction d'ordres de braquage reçus ;
- au moins un manche de commande (5) apte à être actionné manuellement par un pilote de l'aéronef, la position du manche de commande (5) générant des premiers ordres de guidage représentatifs de ladite position ;
- un dispositif de pilotage automatique (6) apte à générer automatiquement des seconds ordres de guidage ; et
- au moins un calculateur de commandes de vol (4) configuré pour calculer automatiquement des ordres de braquage de gouverne, à l'aide d'une unité de calcul intégrée (10) qui contient des lois de pilotage, cette unité de calcul intégrée (10) utilisant des ordres de guidage pour calculer ces ordres de braquage de gouverne, lesdits ordres de guidage correspondant auxdits premiers ordres de guidage lors d'un pilotage manuel de l'aéronef et auxdits seconds ordres de guidage lors d'un pilotage automatique de l'aéronef, ledit calculateur de commande de vol (4) comprenant au moins un module de protection (M1 à MN) du domaine de vol de l'aéronef définissant une protection en fonction d'une position de manche de commande (5) reçue lors d'un pilotage manuel, ledit module de protection (M1 à MN) étant apte à limiter l'ordre de braquage transmis à la gouverne (2),
ce procédé étant caractérisé ce qu'il comprend des étapes consistant :
- à surveiller le type de pilotage mis en oeuvre par le système de commande de vol (1) de manière à pouvoir détecter automatiquement un pilotage automatique de l'aéronef à l'aide dudit dispositif de pilotage automatique (6) ; et
- à transmettre automatiquement audit module de protection (M1 à MN) du domaine de vol, lors de la détection d'un pilotage automatique, une position auxiliaire prédéterminée, représentant un équivalent de position de manche de commande (5), ledit module de protection (M1 à MN) du domaine de vol utilisant cette position auxiliaire comme position de manche de commande pour mettre en oeuvre la protection lors de ce pilotage automatique.

8. Procédé selon la revendication 7,
**caractérisé en ce que** ladite position auxiliaire peut correspondre au moins à l'une des positions suivantes du manche de commande (5) :
- une position au neutre du manche de commande (5) ;
- une position relative à une déflexion complète du manche de commande (5) ; et
- au moins une position relative à une déflexion du manche de commande (5), comprise entre la position au neutre et la déflexion complète dudit manche de commande (5).

9. Procédé selon l'une des revendications 7 et 8,
**caractérisé en ce qu'**il comprend une étape consistant à modifier le domaine d'activation d'au moins l'un des éléments suivants du système de commande de vol (1) :
- un dispositif automatique de poussée (22) ;
- des aérofreins (24) ;
- une alarme de basse énergie (20) ;
- une unité pour supprimer des informations non essentielles d'un affichage de paramètres primaires de vol dans des situations prédéterminées.

10. Procédé selon l'une quelconque des revendications 7 à 9, **caractérisé en ce qu'**il comprend une étape consistant à limiter un ordre de roulis en fonction de la vitesse lors d'un pilotage automatique.

11. Procédé selon l'une quelconque des revendications 7 à 10, **caractérisé en ce qu'**il comprend une étape consistant, après la mise en oeuvre d'une protection par un module de protection (M1 à MN) du domaine de vol, à ramener automatiquement le dispositif de pilotage automatique (6), dans le mode de guidage initial qui était actif avant la mise en oeuvre de ladite protection, pour tout mode de guidage autre qu'un mode de maintien d'altitude.

12. Aéronef,
**caractérisé en ce qu'**il comporte un système de commande de vol (1) tel que celui spécifié sous l'une quelconque des revendications 1 à 6.

## Patentansprüche

1. Elektrisches Flugsteuerungssystem eines Luftfahrzeugs, welches aufweist:
- wenigstens eine bewegliche Steuerfläche (2), die dafür ausgelegt ist, in Abhängigkeit von empfangenen Ausschlagbefehlen ausgeschlagen zu werden;
- wenigstens einen Steuerknüppel (5), der dafür ausgelegt ist, von einem Piloten des Luftfahrzeugs manuell betätigt zu werden, wobei die Position des Steuerknüppels (5) erste Steuerbefehle erzeugt, die für die Position repräsentativ sind;
- eine automatische Steuervorrichtung (6), die dafür ausgelegt ist, automatisch zweite Steuerbefehle zu erzeugen; und
- wenigstens einen Flugsteuerungsrechner (4), der dafür eingerichtet ist, mithilfe einer integrierten Recheneinheit (10), welche Steuerungsgesetze enthält, automatisch Steuerflächen-Ausschlagbefehle zu berechnen, wobei diese integrierte Recheneinheit (10) Steuerbefehle verwendet, um diese Steuerflächen-Ausschlagbefehle zu berechnen, wobei diese Steuerbefehle bei einer manuellen Steuerung des Luftfahrzeugs den ersten Steuerbefehlen und bei einer automatischen Steuerung des Luftfahrzeugs den zweiten Steuerbefehlen entsprechen, wobei der Flugsteuerungsrechner (4) wenigstens ein Schutzmodul (M1 bis MN) des Flugbereichs des Luftfahrzeugs umfasst, das einen Schutz in Abhängigkeit von einer Position des Steuerknüppels (5) definiert, die bei einer manuellen Steuerung empfangen wird, wobei das Schutzmodul (M1 bis MN) dafür ausgelegt ist, den zu der Steuerfläche (2) übertragenen Ausschlagbefehl zu begrenzen,
wobei dieses Flugsteuerungssystem **dadurch gekennzeichnet ist, dass** es außerdem aufweist:
- ein erstes Detektionselement (12), das dafür eingerichtet ist, automatisch eine automatische Steuerung des Luftfahrzeugs mithilfe der automatischen Steuervorrichtung (6) zu erkennen; und
- ein Hilfselement (13), das dafür eingerichtet ist, bei Erkennung einer automatischen Steuerung eine vorbestimmte Hilfsposition, die ein Äquivalent der Steuerknüppelposition repräsentiert, automatisch zu dem Schutzmodul (M1 bis MN) des Flugbereichs zu übertragen, wobei das Schutzmodul (M1 bis MN) des Flugbereichs diese Hilfsposition als Steuerknüppelposition verwendet, um den Schutz bei dieser automatischen Steuerung durchzuführen.

2. System nach Anspruch 1,
**dadurch gekennzeichnet, dass** der Flugsteuerungsrechner (4) mehrere verschiedene Schutzmodule (M1 bis MN) des Flugbereichs umfasst, und dadurch, dass das Hilfselement (13) dafür eingerichtet ist, bei einer automatischen Steuerung eine Hilfsposition zu wenigstens einigen der Schutzmodule (M1 bis MN) zu übertragen.

3. System nach einem der Ansprüche 1 und 2,
**dadurch gekennzeichnet, dass** es ein zweites Detektionselement (12) aufweist, das dafür eingerichtet ist, bei einer automatischen Steuerung automatisch einen aktuellen Modus der automatischen Steuervorrichtung (6) zu erkennen, und dadurch, dass das Hilfselement (13) dafür eingerichtet ist, eine vorbestimmte Hilfsposition zu übertragen, die diesem aktuellen Modus zugeordnet ist.

4. System nach einem der Ansprüche 1 bis 3,
**dadurch gekennzeichnet, dass** der Flugsteuerungsrechner (4) wenigstens ein Schutzmodul (M1 bis MN) des Flugbereichs aufweist, das wenigstens eine der folgenden Schutzfunktionen ausführt:
- einen Schutz bezüglich hoher Geschwindigkeit;
- einen Schutz bezüglich niedriger Geschwindigkeit;
- einen Schutz bezüglich maximaler Trimmung;
- einen Schutz bezüglich minimaler Trimmung;
- einen Schutz bezüglich des Anstellwinkels; und
- einen Schutz bezüglich Rollbewegung.

5. System nach einem der vorhergehenden Ansprüche,
**dadurch gekennzeichnet, dass** es eine Alarmeinheit (17) aufweist, die dafür eingerichtet ist, einen Piloten gegebenenfalls hinsichtlich der Ausführung einer Schutzfunktion durch das Schutzmodul (M1 bis MN) bei einer automatischen Steuerung vorzuwarnen.

6. System nach einem der vorhergehenden Ansprüche, welches außerdem eine automatische Schubvorrichtung (22) und Luftbremsen (24) aufweist,
**dadurch gekennzeichnet, dass** es Mittel zum Erkennen einer Situation eines Risikos der Ausführung einer Schutzfunktion durch das Schutzmodul (M1 bis MN) umfasst, und dadurch, dass das Flugsteuerungssystem (1) dafür eingerichtet ist, auf wenigstens eine der folgenden Einheiten einzuwirken: die automatische Schubvorrichtung (22) und die Luftbremsen (24) des Luftfahrzeugs, derart, dass die Ausführung einer Schutzfunktion durch das Schutzmodul (M1 bis MN) wenigstens hinausgezögert wird.

7. Verfahren zum Steuern des Fluges eines Luftfahrzeugs mithilfe eines elektrischen Flugsteuerungssystems (1), welches aufweist:
- wenigstens eine bewegliche Steuerfläche (2), die dafür ausgelegt ist, in Abhängigkeit von empfangenen Ausschlagbefehlen ausgeschlagen zu werden;
- wenigstens einen Steuerknüppel (5), der dafür ausgelegt ist, von einem Piloten des Luftfahrzeugs manuell betätigt zu werden, wobei die Position des Steuerknüppels (5) erste Steuerbefehle erzeugt, die für die Position repräsentativ sind;
- eine automatische Steuervorrichtung (6), die dafür ausgelegt ist, automatisch zweite Steuerbefehle zu erzeugen; und
- wenigstens einen Flugsteuerungsrechner (4), der dafür eingerichtet ist, mithilfe einer integrierten Recheneinheit (10), welche Steuerungsgesetze enthält, automatisch Steuerflächen-Ausschlagbefehle zu berechnen, wobei diese integrierte Recheneinheit (10) Steuerbefehle verwendet, um diese Steuerflächen-Ausschlagbefehle zu berechnen, wobei diese Steuerbefehle bei einer manuellen Steuerung des Luftfahrzeugs den ersten Steuerbefehlen und bei einer automatischen Steuerung des Luftfahrzeugs den zweiten Steuerbefehlen entsprechen, wobei der Flugsteuerungsrechner (4) wenigstens ein Schutzmodul (M1 bis MN) des Flugbereichs des Luftfahrzeugs umfasst, das einen Schutz in Abhängigkeit von einer Position des Steuerknüppels (5) definiert, die bei einer manuellen Steuerung empfangen wird, wobei das Schutzmodul (M1 bis MN) dafür ausgelegt ist, den zu der Steuerfläche (2) übertragenen Ausschlagbefehl zu begrenzen,
wobei dieses Verfahren **dadurch gekennzeichnet ist, dass** es Schritte umfasst, die darin bestehen:
- den Typ der Steuerung zu überwachen, die von dem Flugsteuerungssystem (1) durchgeführt wird, um so automatisch eine automatische Steuerung des Luftfahrzeugs mithilfe der automatischen Steuervorrichtung (6) erkennen zu können; und
- bei Erkennung einer automatischen Steuerung eine vorbestimmte Hilfsposition, die ein Äquivalent der Position des Steuerknüppels (5) repräsentiert, automatisch zu dem Schutzmodul (M1 bis MN) des Flugbereichs zu übertragen, wobei das Schutzmodul (M1 bis MN) des Flugbereichs diese Hilfsposition als Steuerknüppelposition verwendet, um den Schutz bei dieser automatischen Steuerung durchzuführen.

8. Verfahren nach Anspruch 7,
**dadurch gekennzeichnet, dass** die Hilfsposition wenigstens einer der folgenden Positionen des Steuerknüppels (5) entsprechen kann:
- einer Neutralstellung des Steuerknüppels (5);
- einer Position, die einer vollständigen Auslenkung des Steuerknüppels (5) entspricht; und
- wenigstens einer Position, die einer Auslenkung des Steuerknüppels (5) zwischen der Neutralstellung und der vollständigen Auslenkung des Steuerknüppels (5) entspricht.

9. Verfahren nach einem der Ansprüche 7 und 8,
**dadurch gekennzeichnet, dass** es einen Schritt umfasst, der darin besteht, den Aktivierungsbereich wenigstens eines der folgenden Elemente des Flugsteuerungssystems (1) zu ändern:
- einer automatischen Schubvorrichtung (22);
- der Luftbremsen (24);
- eines Alarms wegen geringer Energie (20);
- einer Einheit zum Unterdrücken der unwesentlichen Informationen einer Anzeige von primären Flugparametern in vorbestimmten Situationen.

10. Verfahren nach einem der Ansprüche 7 bis 9,
**dadurch gekennzeichnet, dass** es einen Schritt umfasst, der darin besteht, einen Rollbefehl in Abhängigkeit von der Geschwindigkeit bei einer automatischen Steuerung zu begrenzen.

11. Verfahren nach einem der Ansprüche 7 bis 10,
**dadurch gekennzeichnet, dass** es einen Schritt umfasst, der darin besteht, nach der Ausführung einer Schutzfunktion durch das Schutzmodul (M1 bis MN) des Flugbereichs die automatische Steuervorrichtung (6) automatisch wieder in den ursprünglichen Führungsmodus zu versetzen, welcher vor der Ausführung der Schutzfunktion aktiv war, für jeden Führungsmodus mit Ausnahme eines Modus der Höhenhaltung.

12. Luftfahrzeug
**dadurch gekennzeichnet, dass** es ein Flugsteuerungssystem (1) aufweist, wie es unter einem der Ansprüche 1 bis 6 spezifiziert ist.

## Claims

1. Electric flight control system for an aircraft, comprising:
- at least one mobile control surface (2) able to be deflected as a function of deflection commands received;
- at least one control stick (5) able to be actuated manually by a pilot of the aircraft, the position of the control stick (5) generating first guidance commands representative of the said position;
- an automatic piloting device (6) able to automatically generate second guidance commands; and
- at least one flight control computer (4) configured to automatically compute control surface deflection commands, with the aid of an integrated computation unit (10) which contains piloting laws, this integrated computation unit (10) using guidance commands to compute these control surface deflection commands, the said guidance commands corresponding to the said first guidance commands during manual piloting of the aircraft and to the said second guidance commands during automatic piloting of the aircraft, the said flight control computer (4) comprising at least one protection module (M1 to MN) for protecting the flight domain of the aircraft defining a protection as a function of a control stick position (5) received during manual piloting, the said protection module (M1 to MN) being able to limit the deflection command transmitted to the control surface (2),
this flight control system being **characterized in that** it comprises moreover:
- a first detection element (12) configured to automatically detect automatic piloting of the aircraft with the aid of the said automatic piloting device (6); and
- an auxiliary element (13) configured to automatically transmit to the said flight domain protection module (M1 to MN), upon the detection of automatic piloting, a predetermined auxiliary position, representing a control stick position equivalent, the said flight domain protection module (M1 to MN) using this auxiliary position as control stick position to implement the protection during this automatic piloting.

2. System according to Claim 1,
**characterized in that** the said flight control computer (4) comprises a plurality of different flight domain protection modules (M1 to MN), and **in that** the auxiliary element (13) is configured to transmit, during automatic piloting, an auxiliary position to at least some of the said protection modules (M1 to MN).

3. System according to either of Claims 1 and 2,
**characterized in that** it comprises a second detection element (12) configured to detect automatically, during automatic piloting, a usual mode of the automatic piloting device (6), and **in that** the said auxiliary element (13) is configured to transmit a predetermined auxiliary position associated with this usual mode.

4. System according to any one of Claims 1 to 3,
**characterized in that** the flight control computer (4) comprises at least one flight domain protection module (M1 to MN) carrying out at least one of the following protections:
- a high speed protection;
- a low speed protection;
- a maximum trim protection;
- a minimum trim protection;
- an angle of attack protection; and
- a roll protection.

5. System according to any one of the preceding claims,
**characterized in that** it comprises an alert unit (17) configured to forewarn a pilot, if appropriate, of the implementation of a protection by the protection module (M1 to MN) during automatic piloting.

6. System according to any one of the preceding claims, comprising moreover an automatic thrust device (22) and airbrakes (24),
**characterized in that** it comprises means for detecting a situation of risk of implementation of a protection by the protection module (M1 to MN), and **in that** the flight control system (1) is configured to act on at least one of the following assemblies: the automatic thrust device (22) and the airbrakes (24) of the aircraft, in such a way as to at least delay the implementation of the protection by the protection module (M1 to MN).

7. Method for controlling the flight of an aircraft, with the aid of an electric flight control system (1) comprising:
- at least one mobile control surface (2) able to be deflected as a function of deflection commands received;
- at least one control stick (5) able to be actuated manually by a pilot of the aircraft, the position of the control stick (5) generating first guidance commands representative of the said position;
- an automatic piloting device (6) able to automatically generate second guidance commands; and
- at least one flight controls computer (4) configured to automatically compute control surface deflection commands, with the aid of an integrated computation unit (10) which contains piloting laws, this integrated computation unit (10) using guidance commands to compute these control surface deflection commands, the said guidance commands corresponding to the said first guidance commands during manual piloting of the aircraft and to the said second guidance commands during automatic piloting of the aircraft, the said flight control computer (4) comprising at least one flight domain protection module (M1 to MN) for the aircraft defining a protection as a function of a control stick position (5) received during manual piloting, the said protection module (M1 to MN) being able to limit the deflection command transmitted to the control surface (2),
this method being **characterized in that** it comprises steps consisting:
- in monitoring the type of piloting implemented by the flight control system (1) so as to be able automatically to detect automatic piloting of the aircraft with the aid of the said automatic piloting device (6); and
- in automatically transmitting to the said flight domain protection module (M1 to MN), upon the detection of automatic piloting, a predetermined auxiliary position, representing a control stick position equivalent (5), the said flight domain protection module (M1 to MN) using this auxiliary position as control stick position to implement the protection during this automatic piloting.

8. Method according to Claim 7,
**characterized in that** the said auxiliary position can correspond at least to one of the following positions of the control stick (5):
- a position at neutral of the control stick (5);
- a position relating to a complete deflection of the control stick (5); and
- at least one position relating to a deflection of the control stick (5), lying between the position at neutral and the complete deflection of the said control stick (5) .

9. Method according to either of Claims 7 and 8,
**characterized in that** it comprises a step consisting in modifying the domain of activation of at least one of the following elements of the flight control system (1):
- an automatic thrust device (22);
- airbrakes (24);
- a low energy alarm (20);
- a unit for deleting non-essential information of a display of primary flight parameters in predetermined situations.

10. Method according to any one of Claims 7 to 9, **characterized in that** it comprises a step consisting in limiting a roll command as a function of speed during automatic piloting.

11. Method according to any one of Claims 7 to 10, **characterized in that** it comprises a step consisting, after the implementation of a protection by a flight domain protection module (M1 to MN), in automatically returning the automatic piloting device (6) to the initial guidance mode which was active before the implementation of the said protection, for any guidance mode other than an altitude maintaining mode.

12. Aircraft,
**characterized in that** it comprises a flight control system (1) such as that specified under any one of Claims 1 to 6.
